**Europäisches Patentamt**

**European Patent Office**

**Office européen des brevets**

(19)

(11) Numéro de publication: **0 018 616**
**B1**

(12) **FASCICULE DE BREVET EUROPEEN**

(45) Date de publication du fascicule du brevet: **30.11.83**

(51) Int. Cl.³: **H 04 Q 11/04, H 04 Q 3/54**

(21) Numéro de dépôt: **80102279.9**

(22) Date de dépôt: **28.04.80**

(54) **Logique de commande d'une unité de raccordement de multiplex dans un central de commutation temporelle.**

(30) Priorité: **04.05.79 FR 7911321**

(43) Date de publication de la demande:
**12.11.80 Bulletin 80/23**

(45) Mention de la délivrance du brevet:
**30.11.83 Bulletin 83/48**

(84) Etats contractants désignés:
**BE CH DE FR GB IT LI NL SE**

(56) Documents cités:
**FR - A - 2 346 930**
**US - A - 4 127 742**

**1978 NATIONAL TELECOMMUNICATIONS CONFERENCE, vol. 3, décembre 1978 Birmingham, Alabama US SAWADA et al.: "KC 270 digital PABX", page 47.6.4 - 47.6.5**
**1976 NATIONAL TELECOMMUNICATIONS CONFERENCE, vol. 1, novembre/décembre 1976 Dallas, Texas US GUELDENPFENNIG: "Conceptual systems approach for a digital PABX" pages 11.1.-1 à 11.1.-5**
**1978 INTERNATIONAL CONFERENCE ON COMMUNICATIONS, vol. 2, juin 1978 Toronto CA ECKHART et al.: "DMS-200, System Evolution", pages 32.1.1 - 32.1.5**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Guezou, Jean**
**Lotissement de Keranstivel**
**F-22300 Lannion (FR)**
Inventeur: **Le Dieu, Bernard**
**Rue de Keralsam**
**F-22700 Perros Guirec (FR)**
Inventeur: **Martin, Jean-Pierre**
**Le Guern**
**F-22670 Pleumeur Bodou (FR)**

(74) Mandataire: **Weinmiller, Jürgen et al,**
**Zeppelinstrasse 63**
**D-8000 München 80 (DE)**

(56) Documents cités:
**PROCEEDINGS OF THE IEEE, vol. 65, no. 9, septembre 1977 New York US ROSS et al.: "Design approaches and performance criteria for integrated voice/data switching", pages 1283-1295**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**OO18 616**

L'ONDE ELECTRIQUE, vol. 57, no. 10, octobre
1977 Paris FR LE STRAT et al.: "Systeme AXE",
pages 585-590
TELCOM REPORT, vol. 2, no. 3, mars 1979
Munich DE SUCKFULL: "Architektur einer neuen
Linie digitaler öffentlicher
Fernsprechvermittlungen", pages 174-183
Commutation et Electronique No. 34, juillet
1971, pages 25 à 47

# Logique de commande d'une unité de raccordement de multiplex dans un central de commutation temporelle

L'invention concerne une logique de commande d'une unité de raccordement de multiplex dans un central de commutation temporelle comportant des marqueurs et un organe de contrôle, la logique de commande étant reliée par une liaison aux marqueurs et par une autre liaison à l'organe de contrôle, l'unité de raccordement comportant, lorsqu'elle est complètement équipée, un nombre pair de modules de raccordement.

On sait qu'un central de commutation temporelle est relié soit à des centraux électromécaniques, soit à des centraux de commutation temporelle, soit à des concentrateurs distants appelés satellites. Chacun de ces centraux a une horloge, dite horloge distante, qui n'est pas en phase avec l'horloge locale, les différentes horloges étant plésiochrones. Il est donc nécessaire de synchroniser les voies temporelles des multiplex avec l'horloge locale, avant de pouvoir détecter un mot de verrouillage de trame, et un mot de verrouillage multi-trame et par conséquent d'extraire la signalisation acheminée par chaque multiplex dans chaque trame.

On connaît des dispositifs de raccordement de multiplex notamment par l'article de MM. Feuerstein, Jacob, Renoulin et Guezou, "Groupe d'Equipements de synchronisation du système de commutation temporelle Platon" paru dans la revue "Commutation et Electronique", no 34, Juillet 1971, pages 7 à 24.

De tels dispositifs de raccordement de multiplex sont commandés par une logique de commande décrite dans un article de MM. Jacob, Renoulin et Voyer "Concentrateur spatio-temporel 500 abonnés pour système de commutation temporelle Platon E10' paru dans la Revue Commutation et Electronique no 34, Juillet 1971, pages 25 à 47.

La logique de commande des dispositifs de raccordement connus présente l'inconvénient de ne pouvoir commander qu'un nombre réduit, inférieur ou égal à quatre, de modules de raccordement, ce qui entraîne des contraintes dans l'implantation du central du fait qu'il faut un grand nombre de logiques de commande pour l'ensemble des multiplex à synchroniser.

L'invention a pour but de pallier les inconvénients des logiques de commande utilisées pour la commande d'une unité de raccordement de multiplex. Ce but est atteint par la logique de commande telle que spécifiée ci-dessus, qui est en outre caractérisée par le fait qu'elle comporte au moins un ensemble constitué par un processeur maître, deux processeurs esclaves gérant chacun la moitié des modules de raccordement et reliés chacun à une mémoire, une mémoire d'échanges reliée à une mémoire commune et d'une part aux processeurs esclaves par un coupleur de bus et d'autre part au processeur maître, un coupleur interprocesseurs relié à chacun des processeurs esclaves et au processeur maître, et un interface d'échange relié au processeur maître ainsi qu'à des marqueurs et à un organe de contrôle du central.

Dans un mode de réalisation préféré de l'invention, la logique de commande comporte deux ensembles identiques, dont l'un est en service et l'autre en réserve.

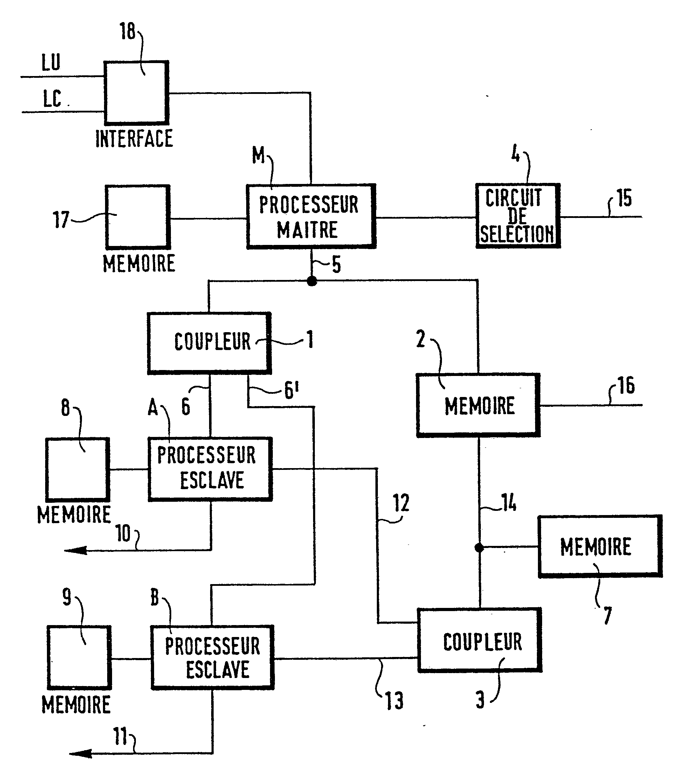

L'invention va être décrite à l'aide d'un exemple de réalisation illustré par la figure annexée qui représente un ensemble d'une logique de commande conforme à l'invention. Un ensemble comporte essentiellement un processeur maitre M, un coupleur interprocesseurs 1, une mémoire d'échanges 2, un coupleur de bus 3 et deux processeurs esclaves A et B.

Le processeur maitre M est relié à une mémoire 17 et à un interface d'échange 18 relié par une liaison LU aux marqueurs (non représentés) du central et par une liaison LC à un organe de contrôle faisant également partie du central.

Le processeur maitre M est relié par un bus 5 au coupleur interprocesseurs 1 et à la mémoire d'échanges 2. Le coupleur interprocesseurs est relié par des liaisons d'état 6 et 6' à chacun des processeurs esclaves A et B; les processeurs esclaves A et B ont accès à la mémoire commune 7 par l'intermédiaire du coupleur de bus 3. Le processeur esclave A est relié à une mémoire programme 8, et par un bus 10 à quatre modules de raccordement. Le processeur esclave B est relié à une mémoire programme 9, et à quatre autres modules de raccordement par un bus 11. Le coupleur de bus 3 est relié par un bus 12 au processeur esclave A, et par un bus 13 au processeur esclave B; il est également relié par un bus 14 à la mémoire d'échanges 2 et à la mémoire commune 7. Cette mémoire commune 7 est composée d'une zone mémoire de travail et d'une zone table de traitement de la signalisation téléphonique.

La mémoire d'échanges 2 permet les échanges entre le processeur maitre M et les processeurs esclaves A et B par l'intermédiaire du coupleur de bus 3.

Le processeur maitre M et les processeurs esclaves A et B sont identiques, et les mémoires 7, 8, 9 et 17 sont identiques.

Lorsque l'on utilise, pour des raisons de sécurité, un autre ensemble logique de commande, identique à celui de la figure, cet autre ensemble logique de commande gère les mêmes modules de raccordement que ceux gérés par les processeurs esclaves A et B de la figure. Les deux ensembles logiques de commande ne fonctionnent donc pas simultanément; la commande de basculement d'un ensemble logique de commande sur l'autre est effectuée par un seul circuit de sélection 4, représenté sur la figure; il est relié à chaque processeur maitre; la liaison 15 indique donc la liaison avec le processeur maitre de l'autre ensemble logique. De même la mémoires d'échanges 2 de chaque ensemble logique de commande est reliée à l'autre ensemble logique de commande par un bus 16.

Le coupleur de bus 3 assure deux fonctions: la première concerne l'élaboration des temporisations pour chacun des processeurs esclaves A et B, et la seconde concerne le couplage des accès bus d'adresses et bus de données des deux processeurs esclaves vers la mémoire commune 7.

L'élaboration des temporisations s'effectue à partir des données reçues de chaque processeur esclave; le coupleur interprocesseurs peut mémoriser 2000 temporisations ce qui correspond à 2 temporisations par voie temporelle.

L'accès des processeurs esclaves à la mémoire d'échange 2 est réalisé par regroupement d'une part des deux bus d'adresses et d'autre part des deux bus de données, qui constituent le bus 14, chaque processeur esclave étant relié au coupleur de bus 3, par un bus d'adresses et un bus de données; la mémoire d'échange 2 est donc reliée au coupleur de bus par le bus 14 constitué par un bus d'adresses et un bus de données obtenus chacun par regroupement des bus d'adresses et des bus de données provenant des processeurs esclaves. Chaque regroupement est fait par l'intermédiaire de portes validées selon l'ordre d'arrivée des demandes d'accès à la mémoire d'échange 2 par les processeurs esclaves A et B. Pour la transmission des messages de la mémoire d'échange 2, vers les processeurs esclaves, des portes permettent d'aiguiller. le bus d'adresses du bus 14 vers les deux bus d'adresses des bus 12 et 13, et le bus de données du bus 14 vers les deux bus de données des bus 12 et 13. Après réception d'une demande d'un processeur esclave, un signal "pas prêt" est émis vers l'autre processeur esclave; lorsque la demande est satisfaite, le signal "pas prêt" est supprimé et l'autre processeur esclave peut avoir accès à la mémoire d'échange.

La mémoire d'échange 2 mémorise les états des voies temporelles des équipements des modules de raccordement et sert de zone d'échanges entre tous les processeurs; elle a une capacité de 8000 mots de 9 eb (éléments binaires) dont 8 eb sont utilisés. Pour les échanges à l'intérieur de l'ensemble logique de commande, les opérations d'écriture et de lecture peuvent être commandées par le processeur maitre ou par les processeurs esclaves; des zones d'écriture et de lecture sont réservées à chacun des processeurs maitre et esclaves; pour les échanges avec un autre ensemble logique de commande (cas d'une logique de commande dupliquée), cet autre ensemble logique de commande n'a accès, par le bus 16, à la mémoire d'échanges 2 que pour des opérations de lecture.

Le coupleur de bus 3 est relié à chaque processeur esclave par un bus 12, 13 respectivement, chacun de ces bus étant constitué d'un bus de données et d'un bus d'adresses. Le coupleur de bus 3 effectue le regroupement des bus de données et des bus d'adresses des bus 12 et 13 vers la mémoire d'échanges 2 et la mémoire commune 7; il assure également l'aiguillage du bus de données et du bus d'adresses du bus 14, vers le bus d'adresse et le bus de données de chacun des bus 12 et 13 pour les messages destinés aux processeurs esclaves A et B. La mémoire d'échanges reçoit les appels des processeurs maitre M et esclaves A et B, et les appels de l'autre ensemble logique de commande par le bus 16 qui comporte un bus de données et un bus d'adresses les bus 5, 14 et 16 sont gérés suivant une priorité cyclique.

Le circuit de sélection 4 permet, dans le cas d'une logique dupliquée, de basculer d'un ensemble logique de commande sur un autre. La décision de basculement résulte soit d'une faute détectée dans un ensemble logique, soit d'une commande manuelle, soit encore cycliquement hors détection de fautes.

Par le terme fautre il faut entendre tout paramètre contribuant à la demande de basculement. L'ensemble logique de commande en service est dit "Pilote" l'autre étant dit "Réserve". Le circuit de sélection reçoit donc les fautes détectées par les deux ensembles logiques de commande et les demandes de basculement manuel. Le basculement n'a lieu que si l'ensemble logique de commande en "Réserve" est opérationnel. La réception d'une demande de basculement provoque un appel vers .l'ensemble logique de commande en réserve, et le basculement n'est validé que sur réponse positive de cet ensemble en réserve.

L'ensemble logique de commande effectue toutes les fonctions de téléphonie: gestion des changements d'états avant de les émettre vers leur destination, appel des marqueurs pour communiquer les nouveaux appels et les raccrochages, transfert des messages sémaphores.

Un ensemble logique de raccordement est relié à deux marqueurs par la liaison LU, et les échanges s'effectuent dans une trame de 125 microsecondes utilisant le rythme $\theta$ (1,28 MHz) délivré par la base de temps du central. La trame est divisé en 32 voies, Vto à Vt31.

La première moitié de la trame est réservée à la signalisation entre les marqueurs et l'unité de raccordement de multiplex via l'ensemble logique de commande; un temps d'échange tn est affecté à un module de raccordement; au temps tn $\theta$2 appel du premier marqueur vers le module de raccordement n, ou inversement; au temps tn $\theta$4 appel du deuxième marqueur vers le module de raccordement n, ou inversement: l'eb d'essai de la liaison est tn $\theta$1; la seconde

moitié de la trame est réservée à l'émission du message, les voies t16 à t23 étant réservées au premier marqueur, les voies t24 à t31 étant réservées au deuxième marqueur; un eb d'imparité est placé en fin de message, en t23 θ3 ou t31 θ3; en cas de bonne réception du message l'organe récepteur émet dans la même trame un eb de "bien reçu", en t23 θ5 pour le premier marqueur, en t31 θ5 pour le deuxième marqueur; en cas de faute d'imparité détecté par l'ensemble logique de commande celui-ci n'émet pas de "bien reçu"; la liaison LU est commutée (chaque liaison à un marqueur est doublée pour des raisons de sécurité) et la faute est signalée à l'organe de contrôle du central; le marqueur renouvelle une fois le message erroné, y compris la procédure d'appel-réponse; la réponse de la logique de commande se fait sans procédure d'appel réponse dans le créneau correspondant au marqueur; s'il y a faute d'imparité le marqueur n'émet pas de signal bien reçu, commute la liaison, signale la faute à l'organe de contrôle; le module de raccordement renouvelle une fois son message; les messages à l'initiative de l'ensemble logique de commande se déroulent avec procédure d'appel réponse, et le processus de transmission est rigoureusement identique à celui utilisé pour les messages à l'initiative des marqueurs.

L'ensemble logique de commande est également relié à l'organe de contrôle par la liaison LC. Les échanges s'effectuent dans une trame de 125 microsecondes utilisant le rythme θ; la trame est divisée en 32 voies to à t31. La première moitié de la trame transmet la signalisation: appels réponses, positionnements; la deuxième moitié transmet les messages d'exploitation et de maintenance. L'appel de l'ensemble logique de commande et les positionnements se font, dans la première moitié de la trame, avec un numéro d'appel caractérisant l'ensemble logique de commande. La destination précise des messages d'exploitation et de maintenance est donnée en t18 θ4 et t18 θ5 selon le codage suivant: 00 désigne une unité de raccordement distante, 01 désigne un module de raccordement, 10 désigne la logique de commande, donc l'un ou l'autre ensemble logique de commande.

Les positionnements d'exploitation de l'ensemble logique de commande se font par un code de positionnement émis dans le créneau de temps affecté à la logique de commande:

F1 commande une mise en test

F2 commande une mise en service

F3 commande une mise hors service

La commande de mise en test provoque la substitution des liaisons LU par des liaisons LU' de test.

Toute transition de l'état hors service ou test vers l'état en service provoque la remise à zéro de l'ensemble logique de commande.

**Revendications**

1. Logique de commande d'une unité de raccordement de multiplex dans un central de commutation temporelle comportant des marqueurs et un organe de contrôle, la logique de commande étant reliée par une liaison (LU) aux marqueurs et par une autre liaison (LC) à l'organe de contrôle, l'unité de raccordement comportant, lorsqu'elle est complètement équipée, un nombre pair de modules de raccordement, caractérisée par le fait qu'elle comporte au moins un ensemble constitué par un processeur maitre (M), deux processeurs esclaves (A, B) gérant chacun la moitié des modules de raccordement et reliés chacun à une mémoire (8, 9), une mémoire d'échanges (2) reliée à une mémoire commune (7) et d'une part aux processeurs esclaves par un coupleur de bus (3) et d'autre part au processeur maitre, un coupleur interprocesseurs (1) relié à chacun des processeurs esclaves et au processeur maitre, et un interface d'échange (18) relié au processeur maitre ainsi qu'à des marqueurs et à un organe de contrôle du central.

2. Logique de commande selon la revendication 1, caractérisée par le fait qu'elle comporte deux ensembles identiques reliés à la même unité de raccordement, que le processeur maitre de chaque ensemble est relié à un circuit de sélection (4) assurant le basculement du fonctionnement d'un ensemble sur l'autre, et que la mémoire d'échanges (2) de chaque ensemble est reliée à l'autre ensemble.

3. Logique de commande selon l'une des revendications 1 et 2, caractérisée par le fait que le processeur maitre et les processeurs esclaves sont identiques.

4. Logique de commande selon l'une des revendications 1 et 2, caractérisée par le fait que la mémoire commune (7) et les mémoires (8, 9) associées aux processeurs esclaves (A, B) sont identiques.

5. Logique de commande selon l'une des revendications 1 et 2, caractérisée par le fait que les processeurs esclaves ont accès à la mémoire d'échange (2) par l'intermédiaire du coupleur de bus (3), ledit accès ayant lieu dans l'ordre d'arrivée des demandes émises par les processeurs esclaves.

6. Logique de commande selon l'une des revendications 1 et 2, caractérisée par le fait qu'elle est reliée à une unité de raccordement comportant huit modules de raccordement, chaque module de raccordement étant relié à quatre multiplex entrants et quatre multiplex sortants.

**Patentansprüche**

1. Steuerlogik für eine Multiplexverbindungseinheit in einer Zeitmultiplexvermittlungsstelle mit Markierern und einem Steuerorgan, wobei die Steuerlogik über eine Verbindung (LU) mit den Markierern und über eine andere Verbindung (LC) mit dem Steuerorgan verbunden ist und wobei die Verbindungseinheit, wenn sie voll ausgebaut ist, eine gerade Zahl von Verbindungsmoduln aufweist, dadurch gekennzeichnet, daß sie mindestens eine Einheit aufweist, die aus einem Hauptprozessor (M), zwei Satellitenprozessoren (A, B), die je die Hälfte der Verbindungsmoduln betreuen und die je mit einem Speicher (8, 9) verbunden sind, einem Austauschspeicher (2), der mit einem gemeinsamen Speicher (7) und einerseits mit den Satellitenprozessoren über einen Buskoppler (3) und andererseits mit dem Hauptprozessor verbunden ist, aus einem Prozessorkoppler (1), der mit jedem der Satellitenprozessoren und dem Hauptprozessor verbunden ist, und aus einem Austausch-Interface (18) besteht, das mit dem Hauptprozessor und mit Markierern und einem Steuerorgan der Vermittlungsstelle verbunden ist.

2. Steuerlogik nach Anspruch 1, dadurch gekennzeichnet, daß sie zwei identische Einheiten aufweist, die mit der gleichen Verbindungseinheit verbunden sind, daß der Hauptprozessor jeder Einheit an einen Auswahlschaltkreis (4) angeschlossen ist, der das Kippen des Betriebs von einer Einheit zur anderen bewirkt, und daß der Austauschspeicher (2) jeder Einheit mit der anderen Einheit verbunden ist.

3. Steuerlogik nach einem der Ansprüche 1 und 2, dadurch gekennzeichnet, daß der Hauptprozessor und die Satellitenprozessoren identisch sind.

4. Steuerlogik nach einem der Ansprüche 1 und 2, dadurch gekennzeichnet, daß der gemeinsame Speicher (7) und die zu den Satellitenprozessoren (A, B) gehörenden Speicher (8, 9) identisch sind.

5. Steuerlogik nach einem der Ansprüche 1 und 2, dadurch gekennzeichnet, daß die Satellitenprozessoren Zugang zum Austauschspeicher (2) über den Buskoppler (3) haben, wobei der Zugang in der Reihenfolge der Anfragen von den Satellitenprozessoren erfolgt.

6. Steuerlogik nach einem der Ansprüche 1 und 2, dadurch gekennzeichnet, daß sie an eine Verbindungseinheit angeschlossen ist, die acht Verbindungsmoduln aufweist, wobei jeder Verbindungsmodul mit vier ankommenden und vier ausgehenden Multiplexkanälen verbunden ist.

**Claims**

1. A control logic for a multiplex connection unit in a time division exchange center comprising markers and a control organ, the control logic being connected by a link (LU) to the markers and by another link (LC) to the control organ, the connection unit comprising, when it is fully equipped, an even number of connection modules, characterized in that it comprises at least one arrangement constituted by a master processor (M), by two slave processors (A, B) each controlling one half of the connection modules and each connected to a memory (8, 9), by an interchange memory (2) connected to a common memory (7) and on the one hand to the slave processors via a bus coupler (3) and on the other hand to the master processor, by an interprocessor coupler (1) connected to each of the slave processors and to the master processor, and by an interchange interface (18) connected to the master processor as well as to the markers and to a control unit of the center.

2. A control logic according to claim 1, characterized in that it comprises two identical arrangements connected to the same connection unit, that the master processor of each arrangement is connected to a selection circuit (4) ensuring the switching of functioning from one arrangement to the other, and that the interchange memory (2) of each arrangement is connected to the other arrangement.

3. A control logic according to one of the claims 1 and 2, characterized in that the master processor and the slave processors are identical.

4. A control logic according to one of the claims 1 and 2, characterized in that the common memory (7) and the memories (8, 9) associated to the slave processors (A, B) are identical.

5. A control logic according to one of the claims 1 and 2, characterized in that the slave processors access the interchange memory (2) via the bus coupler (3), said access taking place in the order of arrival of requests emitted by the slave processors.

6. A control logic according to one of the claims 1 and 2, characterized in that it is connected to a connection unit comprising eight connection modules, each connection module being connected to four incoming and four outgoing multiplex channels.